# EUROPEAN PATENT APPLICATION

(11) **EP 0 609 023 A1**
(43) Date of publication of application: **03.08.1994**
(21) Application number: 94300422.6
(22) Date of filing: 20.01.1994
(51) Int. Cl.: B67D 3/00, A47J 31/40

(54) **Liquid dispensing system**

(30) Priority: 25.01.1993 GB 9301375
(71) Applicant: D.A.R.T. DEUTSCHE-AUSSCHANK-RATIONALISIERUNGS-TECHNIK GMBH & CO, D-20457 Hamburg (DE)
(72) Inventor: Andrews, David Dass Systems A.S.A. House, Wallington Surrey SM6 7NA (GB)
(74) Representative: Findlay, Alice Rosemary

(57) **Abstract**

A dispensing device for use with a tank (2) having at least one outlet (8) for material (4) held therein, for example a hot water tank, is described. The device includes at least one delivery tube (10) and a pipe (12) connected between one end of the delivery tube and a tank outlet. A support member (16) is provided for movably supporting the other end of the delivery tube in a first, dispense, position in which the other end of the delivery tube below the level of material in the tank and a second, non-dispense, position in which the other end of the tube is above the level of material in the tank. An actuator mechanism is operable to move support member and hence the delivery tube between the first and second positions and vice versa.

## Description

This invention relates to dispensing systems and in particular to dispensing devices for use with tanks having one or more outlets for material held therein. It has special applicability to dispensing systems including hot water tanks, for example, hot drink vending machines but may be employed in dispensing systems for other materials.

Drinks machines of the type in which hot water is dispensed alone or mixed with additives into cups or jugs are known in which the water is contained and heated in a closed tank within the system. The tank is connected directly to the mains water supply, the pressure of which causes the heated water to be dispensed on opening of a valved outlet to the tank. This known arrangement is relatively uncontrollable because it is dependent on the mains pressure being constant and accordingly it does not provide an accurate regulated output.

In an alternative arrangement, a tank which is open to the atmosphere is employed which has a levelling system to control the supply of water thereto. The water is maintained at about 95°, i.e., near boiling and the output of tank is controlled by a valve generally in the form of a bottom fed solenoid valve. If the head of water does not produce sufficient pressure a pump may be provided.

Both known arrangements suffer from a number of disadvantages. Firstly, scale is formed in the tank which will enter the valve and may also enter the cup or jug. In the former case the scale may block the valve in either the closed position which will prevent dispensing or in the open position which will cause flooding. The latter case will give unpalatable drinks.

If the dispensing system is not operated for some time then water contained upstream of the valve will cool and the first cup dispensed from the system will be at an unacceptable temperature. In an effort to overcome this, the pipe between the outlet and the valve has been fed back through the tank so that water therein is heated by the water in the tank. This however produces a complicated arrangement.

In the second known arrangement described above, if no pump is provided then the outlet is normally situated at the lowest point of the tank in order that the head pressure be maximised. However, even if the heating element is placed closely adjacent the bottom of the tank, due to convection, the water in this region will be coolest. Therefore the water at the top of the tank must be raised to a temperature higher than that necessary for dispensing in order that that at the bottom of the tank may be at the necessary temperature. This is uneconomical and concentrates scale build up in the vicinity of the tank outlet and, therefore, the valve.

As noted above a pump may be employed in which case water can be extracted from the top of the tank which overcomes the above mentioned problem. However, the cost of the pump adds to the overall cost of the system and pumps are vulnerable to damage from scaling. Attempts have been made in the past to overcome the latter problem by providing nylon pump parts. These have not proved satisfactory however since nylon has a large coefficient of expansion and the pumps are exposed to a wide range of temperatures as the initially cold water is heated up. The pumps have therefore not been very effective.

A dispensing device for use with a tank having at least one outlet for material held therein, in accordance with the invention, the device including at least one delivery tube, a pipe connected between one end of the delivery tube and the tank outlet, a support member for movably supporting the other end of the delivery tube in a first, dispense, position in which the other end of the delivery tube is below the level of material in the tank and a second, non-dispense, position in which the other end of the delivery tube is above the level of material in the tank and an actuator mechanism for moving the support member, and hence the delivery tube, between the first and second positions and vice versa.

Amongst the advantage of this is that no valve or other part which is vulnerable to damage from scale is required at the outlet. Furthermore, the delivery tube and pipe are completely voided on raising of the former from the first to the second position thereof so that there is no "dead end" of material. In other words, and in the particular case of a drinks machine, there is no undispensed water which can cool before subsequent dispensing and then give unpalatable results.

The arrangement is simple and can be very accurately controlled to give a well regulated output. The fact that the support member and hence the delivery tube is positively moved, both from the first to the second position and from the second to the first position, is important in this respect as a sharp dispense cut-off is ensured. The delivery tube further acts as an overflow pipe when in the second position.

The tube and pipe can have large internal dimensions whereby high outputs can be achieved. Moreover, the pipe and tube do not have to have the same dimensional stability as pumps and therefore can be made from a wide variety of materials. In particular they can be made from materials which are resistant to scaling for example silicon rubber.

The delivery tube is suitably formed of a rigid material. The connection between the pipe and the delivery tube and/or the outlet is then so arranged and/or the pipe is so arranged or formed as to accommodate movement of the rigid delivery tube between the first and the second positions and vice versa. By making the delivery tube of rigid material movement thereof is facilitated.

To accommodate movement of the delivery tube, the pipe may be formed of a flexible material and/or may be shaped such as to provide flexure, for example, a portion of the pipe may be in the form of a compressible bellows or a compressible coil.

The pipe may alternatively be formed of a rigid material. In this case, to accommodate movement of the delivery tube, the delivery tube and the pipe may be hingedly connected either by a separate hinged connector therebetween or by an integral flexible portion therebetween. In an alternative arrangement one of the delivery tube and the pipe may be telescopically receivable within the other, a seal being provided between the two. The hinged or telescopic connection again accommodates the movement of the delivery tube.

In a preferred embodiment an outlet tube is securable at or through the outlet which is connected to the delivery tube via the pipe. If the delivery tube and the pipe are not capable of relative movement, in particular in the case where they are both rigid and integral, the connection between the pipe and the outlet tube should be such as to accommodate movement therebetween. This can be achieved by employing, for example, a hinge or telescopic connection of the type discussed above.

Where movement of the delivery tube is accommodated by the connection between the delivery tube and the pipe and/or by the form of the pipe, the outlet tube and the pipe may be integral.

In a particularly preferred embodiment the actuator mechanism includes means for biassing the support member and hence the delivery tube in either the first or the second position and an actuator member operable to act against the biassing means to move the delivery tube to respectively either the second or the first position. The biassing means may comprise either a spring or a counterbalance or the actuator member in the non-operative state thereof.

A very suitable form for the actuator mechanism comprises a solenoid, the rod of which is connected to or comprises the support member, i.e. the delivery tube is indirectly or directly connected to the solenoid rod. A solenoid is capable of rapid and controlled operation which will give very well regulated dispensing. However, simpler forms of actuator mechanism could be provided, in particular, a manually operated button connected by a mechanical linkage to the support member could be employed.

The tank outlet can be positioned just below the tank fill level since the head pressure does not need to be so large as with known arrangements. Water can therefore be taken from the hottest point.

The tank may have plural outlets in which case a pipe will be provided for each outlet, each with an associated delivery tube or all connected to a single delivery tube. Alternatively plural delivery tube/pipe combinations may connect to a single outlet or outlet tube.

The invention will now be further described by way of example with reference to the accompanying drawings in which:-
Figure 1 is a section through a tank illustrating, in partial section, part of a dispensing device in accordance with the invention;
Figure 2 is a side sectional view of another part of the dispensing device of Figure 1;
Figure 3 is a section taken along the line A-A of the device of Figure 2;
Figure 4 is a similar view to Figure 2 but with the device in the dispense position; and
Figures 5 to 10 are similar views to Figure 1 but showing alternative embodiments.

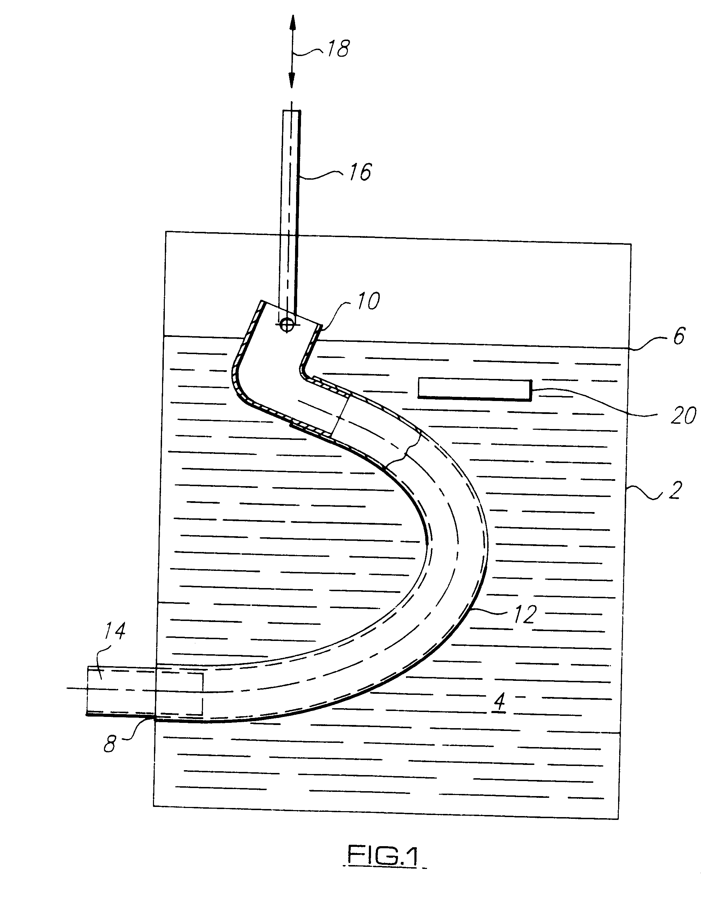

Figures 1 and 5 to 10 show a tank 2 filled with a material 4 to a fill level 6 and having an outlet 8 positioned below fill level 6.

A dispensing device provided for the tank 2 comprises a delivery tube 10 connected to the outlet 8 by a pipe 12. In certain of the embodiments, an outlet tube 14 is provided at the outlet 8 and is connected to the pipe 12.

The delivery tube 10 is attached to a support rod 16 which is moveable as indicated by double-headed arrow 18 to position the free end of delivery tube 10 above or below the fill level 6. On positioning the free end of the delivery tube 10 below the fill level 6, material 4 within the tank 2 will pass into the delivery tube 10 and thence to the outlet 8 via pipe 12. On subsequent positioning of the free end of delivery tube 10 above the fill level 6, the flow of material 4 from the tank 2 will cease and all material remaining within the delivery tube 10 or pipe 12 will pass out of the outlet 8 thus voiding the delivery tube 10 and pipe 12.

In the case where the tank 2 is filled with hot water, all the water which enters delivery tube 10 is dispensed from outlet 8, that is, no dead end of cooling water is produced. Further, the water is taken from the top of the tank 2 where it will be hottest. The water heater, which is schematically illustrated at 20, does not have to be near the outlet 8. Scale and debris in the base of the tank will not be dispensed.

The bores of the tubes 10, 14 and pipe 12 can be large, e.g. ½'' diameter especially if they are formed from non-scaling material so that a significant dispense capacity is possible.

The other end of the support rod 16 is mounted on a pivot pin connected between the ends of a pair of parallel arms 22. At their opposite ends, the arms 22 include apertures for receiving a pivot shaft 24 which extends between a pair of spaced supports 26. The supports 26 also mount an anchor shaft 28 which passes through the rod 30 of a solenoid 32. The solenoid 32 is carried on a base plate 34 extending between and integrally formed with the arms 22.

The supports 26 are mounted on the tank 2 or on any suitable component of a dispensing system of which the tank 2 forms part.

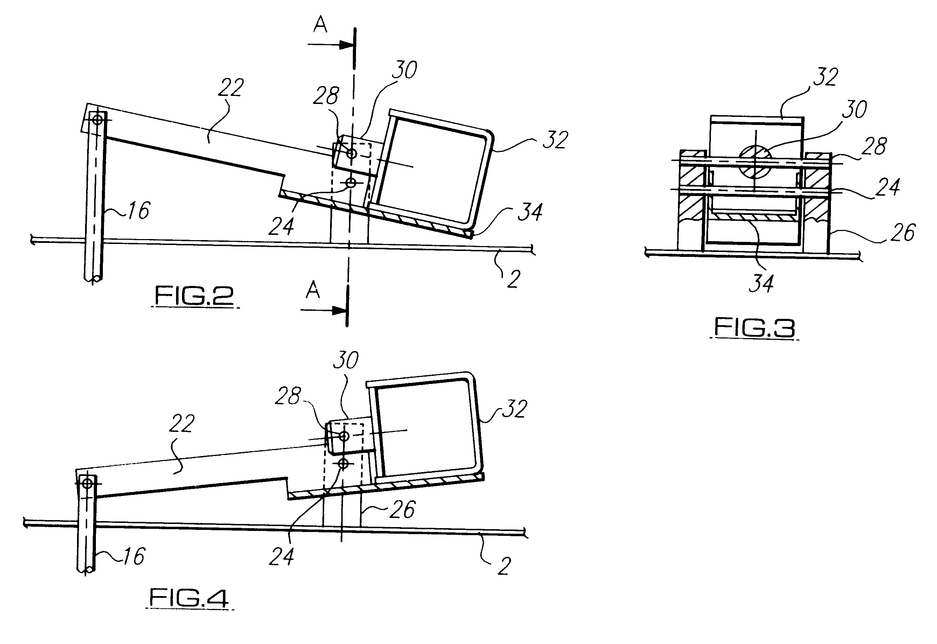

The solenoid 32 is shown in Figure 2 in a de-energised state with the rod 30 extending fully outward therefrom. On energisation of the solenoid 32 the rod 30 thereof retracts thereinto which causes anti-clockwise pivoting of the solenoid 32 around anchor shaft 28. As a result of this the base plate 34, to which the solenoid 32 is attached, and hence the arms 22 pivot around pivot shaft 24. Operating rod 16 therefore moves downwards and delivery tube 10 is lowered below the fill level 6. Dispensing of material 4 in the tank 2 takes place. The dispense position is shown in Figure 4.

To cease dispensing, the solenoid 32 is de-energised which causes the rod 30 thereof to extend outwards. The solenoid 32 therefore pivots clockwise around the anchor shaft and its weight causes the base plate 34 and arms 22 also to pivot clockwise about pivot shaft 24. Operating rod 16 and delivery tube 10 are thereby raised. Material 4 can no longer enter delivery tube 10. However, dispensing will continue for a short while whilst the delivery tube 10 and pipe 12 void of material 4 therein.

Energisation of the solenoid 32 thus causes movement of the support rod 16 and hence delivery tube 10 from the non-dispense position to the dispense position. They are biased back from the dispense position to the non-dispense position by the self weight of the solenoid 32 which acts as a counter-balance. Other forms of bias may be employed such as a spring or a separate counter-balance. In each case, the biassing means will urge the support rod 16 and hence the delivery tube 10 to either the dispense or non-dispense position, energisation of the solenoid 32 overcoming the bias to move the support rod 16 and delivery tube 10 to the other position.

The solenoid 32 could alternatively be arranged above the support rod 16 and be directly linked thereto such that extension and retraction of the solenoid rod 30 respectively directly cause pushing down and pulling up of the support rod 16 and hence the outlet tube 10.

In a further alternative, the operating rod 16 can be dispensed with and the solenoid rod 30 directly connected to the delivery tube 10. Again, extension and retraction of the rod 30 will directly cause positive lowering and raising of the delivery tube 10.

In all cases, the delivery tube is positively and speedily moved, both from the non-dispense to the dispense position and back again. This ensures accurate and controllable dispensing as there is no or only minimal delay between solenoid energisation and dispensing and there is a sharp dispense cut-off.

The solenoid 32 can be controlled by some suitable form of control means such that it is energised or de-energised, as appropriate to cause dispensing depending on the relative arrangement of the solenoid and support rod, for a length of time appropriate for the volume of material 4 which it is desired to dispense. Thus, for example, the arrangement is capable of filling both a cup and a jug with hot water.

It will be appreciated that the actuator member need not be in the form of a solenoid. Any form of electrical, mechanical, gravitational, hydraulic or pneumatic drive device capable of imparting a drive force to the operating rod 16, and hence the delivery tube 10 may employed. In particular, where simplicity of operation is a major design criteria, the actuator member could comprise a motor driven cam or even a manual push button mechanically linked to the operating rod 16 and hence the delivery tube 10.

When the drive force is supplied in only one direction, in general, biasing means will be required to bias the delivery tube 10 in the opposite direction. Suitable forms of biasing means include a counter balance or a spring. Alternatively, as in the illustrated arrangement above, the actuator member may itself include or act as a biassing means.

The delivery tube 10 illustrated in Figure 1 is rigid. To accommodate its movement between the dispense and non-dispense positions and vice versa, the delivery tube 10 is formed with a right angle curve and the pipe 12 is made of flexible material. As the delivery tube 10 is lowered from the position shown in Figure 1 below the fill level 6 the pipe 12 will flex and accommodate this movement.

Forming the delivery tube 10 from a rigid material is preferred since this allows its movement to controlled more accurately. However, it could be made from at least partially flexible material in which case the delivery tube 10 and pipe 12 could be integral as indeed could be the outlet tube 14.

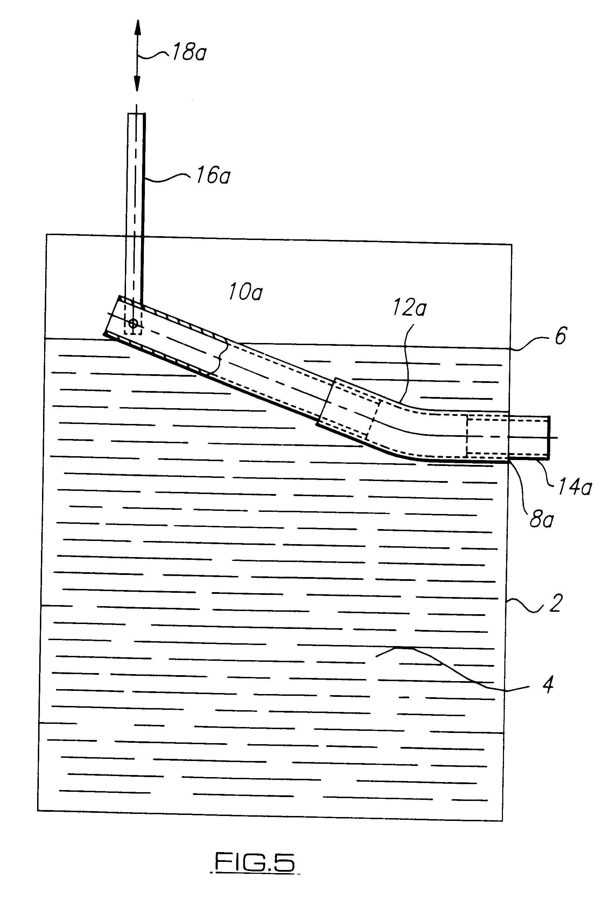

Figure 5 illustrates an alternative arrangement in which a straight relatively long delivery tube 10a is provided. To accommodate movement of the delivery tube 10a again the pipe 12a is made from a flexible material. The liquid outlet 8a is relatively near the fill level 6 but the length of the delivery tube 10a allows this to be placed at an angle to ensure good feed to the outlet 8a.

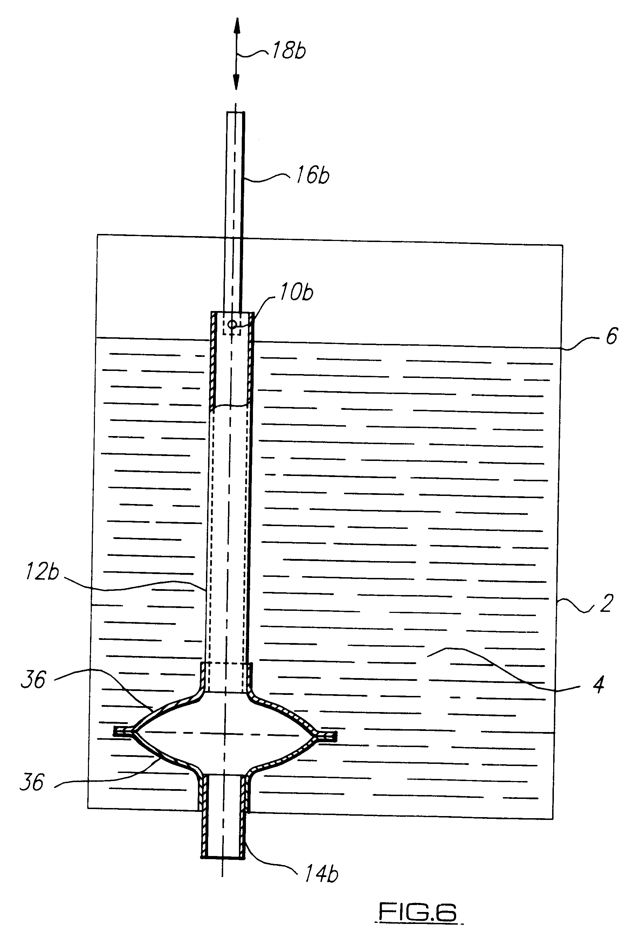

In the arrangement illustrated in Figure 6 the delivery tube 10b and pipe 12b are integral and formed from rigid material. To accommodate movement between the dispense and non-dispense position and vice versa, a pair of flexible discs 36 are provided between the pipe 12b and the outlet tube 14b. The discs 36 provide a seal and flex as the support rod 16b moves in the direction of double-headed arrow 18b.

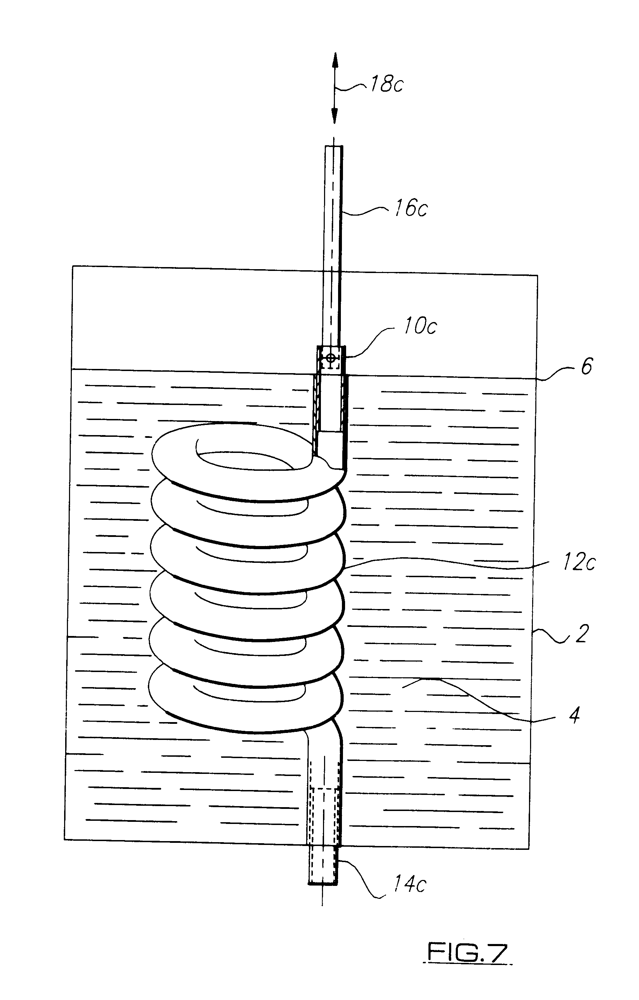

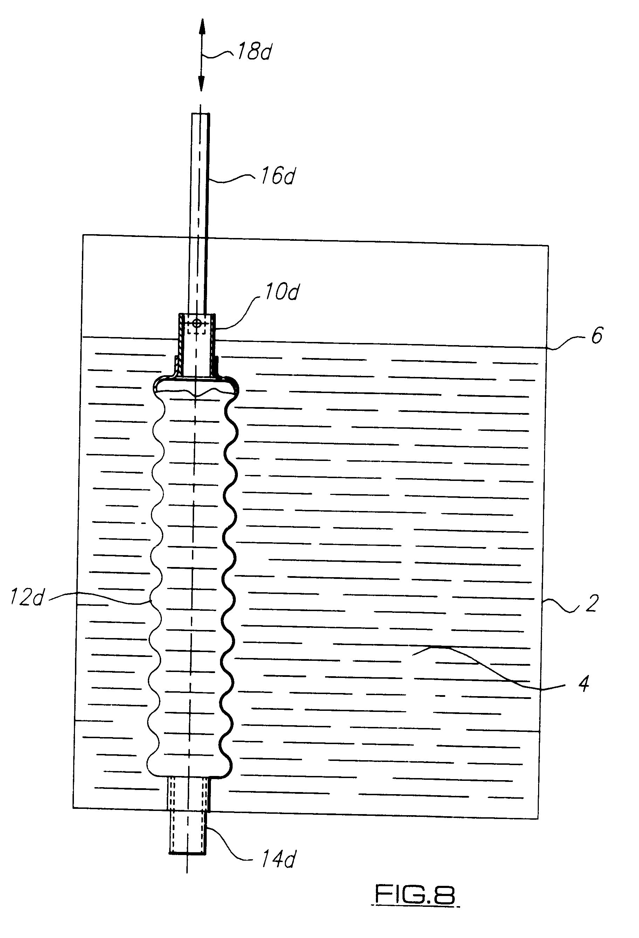

Figures 7 and 8 show further possibilities for providing flexibility in the system to accommodate movement of the delivery tubes 10c and 10d. In the embodiment illustrated in Figure 7 the pipe 12c is formed as a flexible coil whilst in the embodiment illustrated in Figure 8 the pipe 12d is in the form of flexible bellows made for example, from copper.

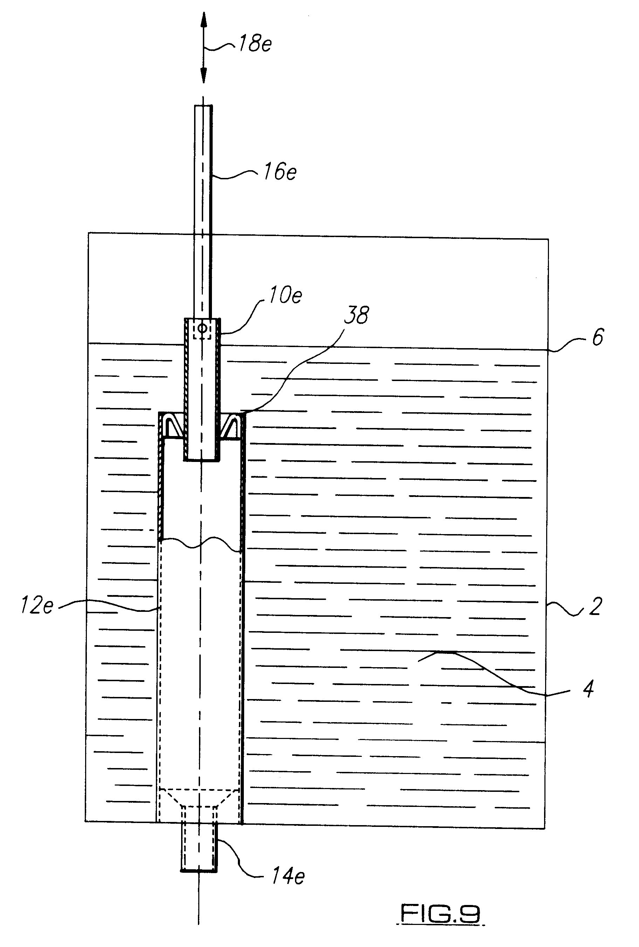

The pipe 12e of the embodiment of Figure 9 is rigid and the delivery tube 10e is telescopically receivable therein, a seal 38 being provided between the two. Movement of the support rod 16e in the direction of the double-headed arrow 18e causes movement of the lower end of the delivery tube 10e into and out of the pipe 12e.

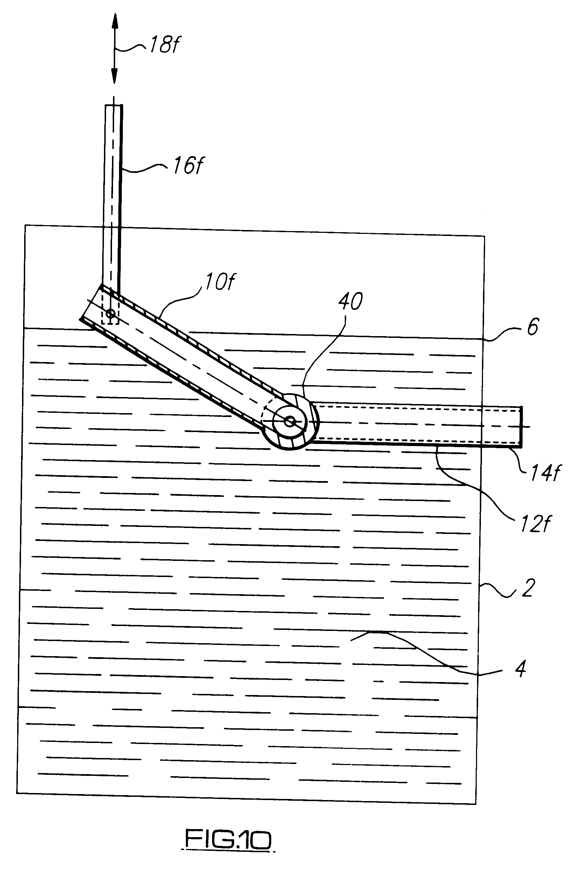

A rigid pipe 12f is also employed in the embodiment of Figure 10 and in this case the pipe 12f and outlet tube 14f are integral. A rotary hinge 40 connects the pipe 12f to the delivery tube 10f.

It will be appreciated from the above that the delivery tube 10 and pipe 12, and outlet tube 14 if provided, can take a multiplicity of forms, a number of possibilities for which are illustrated in the Figures. The dispensing device can therefore be adapted as appropriate for any given dispensing system. In particular, it can be retrofitted to an existing tank no matter where the outlet of that tank is located.

Furthermore, whilst illustrated herein as having a single outlet, the tank 2 could have multiple outlets in which case a plurality of pipes 12 could be employed. These could be supplied by way of a single delivery tube 10 or each pipe 12 could have a dedicated delivery tube 10. In the later case each delivery tube 10 may be separately moveable between the dispense and non-dispense positions and vice versa or a single actuator mechanism could be provided for this purpose.

The tubes and pipe may be made of any suitable material depending on the form they take. Possible materials include plastics and metals. A non-scaling material is particularly preferred, for example, silicon rubber. This will not be necessary when the material is other than water, for example, if it is another fluid which is non-scaling or it is particulate solid material such as grain.

The actuator mechanism need not be positioned outside the tank 2 or even outside the material 4, although this is preferred as no sealing thereof is then required.

The arrangement is simple in form but allows for accurate, well regulated and well controlled dispensing of material. Complicated valving and pumping systems are not required and the problems of scaling of these parts are obviated. The arrangement allows use of materials for the tubes 12 which are not prone to scaling. It is readily susceptible of automation but can be, in an inexpensive version, manually operated.

## Claims

1. A dispensing device for use with a tank having at least one outlet for material held therein, the device including at least one delivery tube, a pipe connected between one end of the delivery tube and the tank outlet, a support member for movably supporting the other end of the delivery tube in a first, dispense, position in which the other end of the delivery tube is below the level of material in the tank and a second, non-dispense, position in which the other end of the delivery tube is above the level of material in the tank and an actuator mechanism for moving the support member, and hence the delivery tube, between the first and second positions and vice versa.

2. A dispensing device as claimed in Claim 1, wherein the delivery tube is formed of a rigid material.

3. A dispensing device as claimed in either Claim 1 or Claim 2, wherein the pipe is formed of a flexible material.

4. A dispensing device as claimed in any preceding Claim, wherein a portion of the pipe is in the form of a compressible bellows or a compressible coil.

5. A dispensing device as claimed in Claim 3 when dependent on Claim 1, wherein the delivery tube and the pipe are integral.

6. A dispensing device as claimed in either Claim 1 or Claim 2, wherein the pipe is formed of a rigid material.

7. A dispensing device as claimed in any preceding Claim, including an outlet tube securable at or through the outlet and connected to the delivery tube via the pipe.

8. A dispensing device as claimed in either Claim 6 or Claim 7, wherein the connection between the pipe and the tube is such as to accommodate movement therebetween.

9. A dispensing device as claimed in Claim 8, wherein the tube and the pipe are hingedly connected or one of the tube and the pipe is telescopically receivable within the other, a seal being provided between the two.

10. A dispensing device as claimed in any preceding Claim, wherein the actuator mechanism includes means for biassing the support member and hence the delivery tube in either the first or the second position and an actuator member operable to act against the biassing means to move the delivery tube to respectively either the second or the first position.

11. A dispensing device as claimed in Claim 10, wherein the biassing means comprises a spring, a counterbalance or the actuator member in the non-operative state thereof.

12. A dispensing device as claimed in any preceding Claim, wherein the actuator mechanism comprises a solenoid.

13. A dispensing system comprising a tank having at least one outlet for material held therein and a dispensing device as claimed in any preceding Claim.

14. A dispensing system as claimed in Claim 13, wherein the tank has multiple outlets and wherein the dispensing device includes a delivery tube and pipe for each outlet, or a single delivery tube and a pipe for each outlet.
